# FASCICULE DE BREVET EUROPEEN

(11) **EP 3 356 180 B1**
(45) Date de publication et mention de la délivrance du brevet: **08.01.2020**
(21) Numéro de dépôt: 16777641.8
(22) Date de dépôt: 28.09.2016
(51) Int. Cl.: B65F 1/00, B60N 3/08, B60N 3/10, B65F 1/14, B60N 3/18

(54) **ACCESSOIRE D'HYGIÈNE DE SIÈGE PASSAGER ET PROCÉDÉ D'ENTRETIEN DE DISPOSITIF DE TRANSPORT DE PASSAGERS**
HYGIENEZUBEHÖR FÜR EINEN PASSAGIERSITZ UND VERFAHREN ZUR WARTUNG EINER PASSAGIERTRANSPORTVORRICHTUNG
HYGIENE ACCESSORY FOR A PASSENGER SEAT AND METHOD FOR MAINTAINING A PASSENGER-TRANSPORT DEVICE

(30) Priorité: 29.09.2015 FR 1559183
(43) Date de publication de la demande: 08.08.2018
(73) Titulaire: C-Gex System's, 82350 Albias (FR)
(72) Inventeur: GUILHEM, Christian, 82350 Albias (FR); GUILHEM, Marc, 82440 Mirabel (FR); GUILHEM, Jacques, 82000 Montauban (FR)
(74) Mandataire: Cabinet BARRE LAFORGUE & associés
(86) Numéro de dépôt international: PCT/EP2016/073141
(87) Numéro de publication internationale: WO 2017/055366

(56) Documents cités:
- WO-A1-2009/019494
- GB-A- 2 370 974
- US-A- 5 833 056
- US-B1- 6 209 596

## Description

L'invention concerne un accessoire d'hygiène de siège passager d'un dispositif de transport de passagers tel qu'un véhicule, du type comprenant un réceptacle à déchets et des moyens de suspension à un siège passager. Elle s'étend à un procédé d'entretien d'un dispositif de transport de passagers tel qu'un véhicule comprenant des sièges passagers.

Les passagers transportés dans des sièges passagers de dispositifs de transport de passagers tels que les véhicules -notamment les véhicules de transport en commun tels que les cars, les trains, les aéronefs, les bateaux de croisière ou de ligne (paquebots)...- génèrent individuellement des déchets de petites dimensions (papiers bonbons, lingettes, poches d'emballage, serviettes, mouchoirs, chewing-gums, gobelets...) qu'il convient de récupérer et d'éliminer en tout cas après débarquement des passagers lors du nettoyage du véhicule. Il est également souhaitable de mettre à disposition de chaque passager au moins un réceptacle à déchets permettant de récupérer ces déchets au fur et à mesure au cours du transport.

En pratique, malgré diverses propositions antérieures théoriques, ce problème n'est pas correctement résolu à bord de la plupart des véhicules de transport en commun de passagers tels que les cars, les trains, les avions de ligne, les bateaux de ligne ou de croisière. En effet, les solutions retenues en pratique pour l'entretien de ces véhicules consistent à imposer au personnel de cabine de circuler régulièrement le long des sièges passagers pour récupérer les différents déchets dans un sac-poubelle et/ou à nettoyer intégralement le véhicule après débarquement des passagers en ramassant les déchets résiduels laissés dans différentes poches éventuelles des sièges passagers ou sur le sol. Ces solutions pratiques sont désagréables pour le personnel et coûteuses en main-d'œuvre et en durée d'immobilisation du véhicule.

Il est à noter à ce titre que la durée du nettoyage après débarquement des passagers devient un paramètre économique critique pour les compagnies de transport à faible coût, dont la rentabilité est directement liée à la rapidité de rotation des véhicules à chaque destination. Par exemple, les compagnies aériennes à faible coût ont développé une pratique d'escale selon laquelle les passagers destinés à un embarquement dans un avion sont placés en attente en passerelle tandis que les passagers du vol précédent débarquent de l'avion et que le personnel d'entretien réalise le nettoyage minimum de ce dernier. Il s'avère alors que ce nettoyage est largement imparfait, de nombreux déchets -notamment des déchets de petites dimensions peu visibles- étant laissés dans les poches à journaux des sièges passagers, ce qui est particulièrement désagréable pour les passagers suivants. Pour cette raison, certaines compagnies aériennes ont même supprimé les poches à journaux, à l'instar des cars et des trains. Cette solution n'est cependant pas satisfaisante car elle limite en particulier le confort des passagers.

Par le passé, les sièges passagers étaient dotés dans les accoudoirs de cendriers pouvant faire office de poubelle pour les très petits déchets. Ces cendriers ont été supprimés avec l'interdiction de fumer à bord des véhicules et pour des raisons de coût et d'hygiène, leur nettoyage posant problème. US 2001/0024056 propose une solution consistant à équiper les sièges d'avion à nouveau de compartiments à déchets spécifiques, ou d'un distributeur de sacs à déchets, à l'arrière des accoudoirs. Cette solution présente les mêmes inconvénients : elle est coûteuse et non parfaitement satisfaisante pour les utilisateurs.

D'autres propositions théoriques ont été formulées depuis longtemps (cf. par exemple DE 22624437, GB 2370974) consistant à suspendre un sac à déchets jetable à l'arrière du dossier des sièges passagers à l'aide de moyens de suspension comprenant en général un adhésif et/ou qui sont particulièrement complexes et/ou spécifiquement adaptés à des formes ou à une structure particulière de siège (et non compatibles avec d'autres structures). Ces propositions théoriques anciennes ne sont pas exploitées en pratique du fait de leur coût et, surtout, de leurs imperfections techniques. Ainsi, lorsqu'un adhésif est utilisé à titre de moyens de suspension, il s'avère soit que cet adhésif est insuffisamment puissant pour soutenir le sac à déchets, soit qu'il laisse des traces sur le siège lorsque le sac à déchets est enlevé après usage. En outre, tous les sièges passagers ne sont pas compatibles avec le collage d'un adhésif. Par exemple, certains sièges passagers de véhicules de transport en commun ont un dossier entièrement revêtu de tissu.

L'invention vise donc à pallier l'ensemble de ces inconvénients en proposant une solution simple, économique et complète au problème de la récupération des petits déchets (c'est-à-dire présentant une dimension maximale, après écrasement éventuel, inférieure à 10 cm) des passagers.

Elle vise à ce titre en particulier à proposer un accessoire d'hygiène de siège passager d'un dispositif de transport de passagers tel qu'un véhicule, notamment de véhicule de transport en commun, permettant la récupération des petits déchets, lors du transport, de façon agréable et hygiénique pour les passagers, et qui de surcroît soit particulièrement peu coûteux et permette un entretien rapide et économique du dispositif de transport de passagers, notamment compatible avec la politique d'escale des compagnies aériennes à faible coût.

Elle vise également à proposer un tel accessoire d'hygiène qui soit compatible avec la plupart des sièges passagers, notamment avec les sièges passagers des véhicules de transport en commun en circulation (avions, trains, cars, bateaux de croisière ou de traversée...), quelles que soient leurs formes et leur structure, qui ne nécessite aucune modification à apporter aux sièges passagers, et qui s'intègre particulièrement bien aux sièges passagers sans en modifier l'esthétique ni le fonctionnement.

Elle vise également à proposer un tel accessoire d'hygiène qui puisse être fabriqué en grandes séries de façon économique, et dont les manipulations, le stockage et le transport avant utilisation sont simples et économiques et ne risquent pas de détériorer l'accessoire d'hygiène.

Elle vise également à proposer un procédé d'entretien (nettoyage) d'un dispositif de transport de passagers tel qu'un véhicule comprenant des sièges passagers qui présente les mêmes qualités.

L'invention concerne donc un accessoire d'hygiène de siège passager de dispositif de transport de passagers selon la revendication 1.

En particulier, un accessoire d'hygiène selon l'invention est exempt de tout autre moyen de suspension que la seule collerette de suspension, et ne nécessite aucun dispositif spécifique pour sa fixation ou sa suspension à un siège passager. L'invention permet ainsi d'utiliser un orifice porte-gobelet de siège passager pour équiper ce dernier d'un réceptacle à déchets individuel à l'aide d'un accessoire d'hygiène selon l'invention particulièrement simple, peu coûteux, jetable, facile et rapide à installer et à enlever, n'empêchant pas l'utilisation normale de l'orifice porte-gobelet (pour y placer un gobelet) et ne nécessitant aucune adaptation particulière du siège lui-même. En effet, la plupart des sièges passagers des dispositifs de transport de passagers tels que les véhicules de transport en commun tels que les avions, les trains, les cars..., et même les sièges passagers d'autres véhicules (automobiles) sont équipés d'au moins un orifice porte-gobelet. Or, les dimensions des orifices porte-gobelet des différents véhicules connus de transport de passagers sont sinon toutes identiques, en tout cas très similaires pour pouvoir être compatibles avec les gobelets jetables, qui sont des articles produits en très grandes séries avec des dimensions très similaires, voire identiques.

Par ailleurs, avantageusement et selon l'invention, le réceptacle à déchets est maintenu replié en accordéon sous ladite collerette de suspension avant usage par une fixation temporaire adaptée pour permettre son déploiement vers le bas. Dès lors, il s'intègre parfaitement au siège passager, et ses manipulations, son stockage et son transport avant utilisation sont simples et économiques et ne risquent pas de détériorer l'accessoire d'hygiène.

Le réceptacle à déchets étant replié en accordéon sous la collerette de suspension présente une épaisseur réduite -notamment inférieure à 2cm, plus particulièrement inférieure à 1,5 cm, de préférence comprise entre 0,5cm et 1cm- et ne modifie pas l'esthétique générale du siège passager. Il peut être adapté pour s'insérer intégralement dans l'épaisseur de l'anneau porte-gobelet ou de la tablette dans laquelle l'orifice porte-gobelet est ménagé, n'en gêne pas le fonctionnement, et peut même en améliorer l'esthétique. La fixation temporaire qui le maintient replié est adaptée pour permettre néanmoins le déploiement vers le bas du réceptacle à déchets, ce dernier étant alors déplié et s'étendant à travers et sous l'orifice porte-gobelet en vue de son utilisation pour recevoir des déchets.

Ainsi, les moyens de suspension d'un accessoire d'hygiène selon l'invention à un siège passager sont exclusivement constitués de ladite collerette de suspension qui est adaptée pour porter à elle seule le réceptacle à déchets et les éventuels déchets qu'il contient, et pour pouvoir coopérer avec un élément de siège passager définissant un orifice porte-gobelet pour permettre la suspension de l'accessoire d'hygiène selon l'invention par rapport à cet élément et donc par rapport au siège passager. De même, le réceptacle à déchets lui-même est également adaptée pour permettre sa coopération avec un orifice porte-gobelet d'un siège passager, notamment de façon à pouvoir passer à travers un tel orifice et s'étendre vers le bas :
- avant usage à l'état replié en accordéon dans l'épaisseur de cet élément du siège passager,
- en cours d'utilisation à l'état déployé vers le bas pour permettre la réception des déchets.

La collerette de suspension d'un accessoire selon l'invention peut faire l'objet de très nombreuses variantes de réalisation, notamment en ce qui concerne sa forme (notamment sa forme périphérique autour de l'orifice porte-gobelet qui peut être notamment circulaire ou polygonale et/ou sa section par un plan axial radial à l'ouverture de passage qui peut être rectangulaire, circulaire, ovale, ou autre), ses dimensions, son matériau constitutif et son assemblage au réceptacle à déchets.

Pour pouvoir être supportée autour d'un orifice porte-gobelet de siège passager et venir en appui sur une face horizontale s'étendant autour de l'orifice porte-gobelet, ladite collerette de suspension doit notamment présenter des dimensions radiales supérieures à celles de l'orifice porte-gobelet.

Dans tout le texte, une pièce de matériau est dite rigide lorsqu'elle ne se déforme pas sous son propre poids au moins. La collerette de suspension doit être suffisamment rigide pour pouvoir supporter le réceptacle à déchets et des déchets qu'il peut contenir autour d'un orifice porte-gobelet. En particulier, avantageusement et selon l'invention, ladite collerette de suspension est formée en au moins un matériau choisi dans le groupe formé des papiers - notamment des papiers rigides-, des cartons, des textiles non-tissés-notamment des textiles non-tissés rigides- et des polymères -notamment des polymères rigides-. La collerette de suspension est par exemple formée d'un polymère rigide choisi dans le groupe formé des polyesters, des polyacrylates (polymères acryliques), des polycarbonates, des polystyrènes, des polyamides, de leurs mélanges et de leurs copolymères.

Par ailleurs, la collerette de suspension d'un accessoire selon l'invention peut présenter toute forme. Dans certains modes de réalisation, avantageusement et selon l'invention, la collerette de suspension est formée d'un anneau torique circulaire. Dans d'autres modes de réalisation, avantageusement et selon l'invention, ladite collerette de suspension est formée d'une rondelle plane circulaire rigide.

La collerette de suspension d'un accessoire selon l'invention s'étend en saillie vers le haut, en surépaisseur par rapport au porte-gobelet. De préférence, la collerette de suspension est adaptée pour présenter une surépaisseur aussi faible que possible. Ainsi, dans certains modes de réalisation, avantageusement et selon l'invention, ladite collerette de suspension présente une épaisseur inférieure à 3mm, par exemple de l'ordre de 1 mm à 1,5 mm. De la sorte, l'accessoire selon l'invention n'empêche pas de rabattre le porte-gobelet (qui peut être une tablette ou un support porte-gobelet dédié) verticalement vers le haut contre un dossier de siège.

L'ouverture de passage définie par la collerette de suspension est de préférence circulaire et présente un diamètre supérieur ou égal à 70 mm, et donc supérieur ou égal à un diamètre d'orifice porte-gobelet, de préférence du même ordre que ce diamètre. Également, dans certains modes de réalisation, avantageusement et selon l'invention ladite collerette de suspension s'étend radialement vers l'extérieur à partir de ladite ouverture de passage de déchets selon un encombrement radial inférieur à 90 mm, et donc inférieur à l'encombrement radial d'un support porte-gobelet rabattable de siège. De la sorte, le support porte-gobelet peut être rabattu vers le haut contre un dossier de siège, ou, dans certains modes de réalisation d'un siège passager, dans un logement recevant ce support porte-gobelet replié.

En particulier, une collerette de suspension d'un accessoire selon l'invention présente avantageusement un diamètre extérieur périphérique inférieur ou égal à un diamètre extérieur périphérique d'un anneau porte-gobelet articulé à l'arrière d'un dossier de siège passager de façon à être rabattable vers le haut. Cela étant, rien n'empêche de prévoir au contraire que la collerette de suspension dépasse radialement vers l'extérieur le diamètre extérieur périphérique d'un anneau porte-gobelet, par exemple qu'elle comporte un rabat adapté pour venir couvrir le chant périphérique d'un anneau porte-gobelet permettant de maintenir l'accessoire en place radialement par rapport à l'anneau porte-gobelet.

Dans certains modes de réalisation avantageux d'un accessoire d'hygiène selon l'invention ladite collerette de suspension présente un diamètre extérieur compris entre 50mm et 100mm ; et ladite ouverture de passage des déchets présente un diamètre compris entre 40mm et 90mm.

Par ailleurs, dans certains modes de réalisation avantageux d'un accessoire selon l'invention le réceptacle à déchets présente une épaisseur suffisamment fine pour ne pas empêcher l'insertion d'un gobelet dans ladite ouverture de passage de déchets et dans l'orifice porte-gobelet. En particulier, le réceptacle à déchets présente une épaisseur inférieure à 2 mm, typiquement de l'ordre de 0,2 mm à 1 mm. Ainsi, lorsqu'un accessoire d'hygiène selon l'invention est en place dans un orifice porte-gobelet, il est encore possible de placer un gobelet dans l'ouverture de passage de telle sorte que ce gobelet soit supporté par le porte-gobelet, et ferme l'ouverture de passage. Avantageusement, dans certains modes de réalisation, la collerette de suspension présente des dents s'étendant radialement en saillie vers l'intérieur de ladite ouverture de passage de déchets. Ces dents peuvent être triangulaires, ou arrondies (par exemple en forme de demi disque) ou autres. Elles permettent de coincer en place un gobelet inséré dans l'ouverture de passage. Elles facilitent ensuite l'extraction de l'ensemble formé par le gobelet et l'accessoire selon l'invention hors de l'orifice porte-gobelet.

Par ailleurs, le réceptacle à déchets d'un accessoire d'hygiène selon l'invention est fixé sous la collerette de suspension, de préférence de façon inamovible, par tous moyens de fixation appropriés, en particulier par des moyens de fixation pouvant être choisis dans le groupe des collages, des coutures, des soudages et de leurs combinaisons.

Le réceptacle à déchets d'un accessoire d'hygiène selon l'invention est replié avant utilisation sous la collerette de suspension, mais peut par ailleurs être rigide, au moins à l'état replié, pour faciliter son insertion dans un orifice porte-gobelet. De préférence, dans certains modes de réalisation d'un accessoire d'hygiène selon l'invention, le réceptacle à déchets est un sac souple replié (avant utilisation pour y placer des déchets) sous ladite collerette de suspension.

Dans certains modes de réalisation avantageux, le sac à déchets est maintenu replié en accordéon avant usage par une fixation temporaire d'une extrémité du sac à déchets sous un opercule frangible fixé sur ladite collerette de suspension et couvrant ladite ouverture de passage des déchets. Un tel opercule frangible peut être formé d'un simple film synthétique recouvrant l'ouverture de passage, et doté de prédécoupe(s) permettant de déchirer facilement cet opercule frangible. En variante ou en combinaison, au moins une ligne de collage frangible peut être placée à l'intérieur du sac à déchets replié, cette ligne de collage frangible reliant les plis formés par le sac à déchets replié.

Dans certains modes de réalisation avantageux, le réceptacle à déchets est formé d'un cylindre souple refermé par un fond. Un tel cylindre souple peut résulter de la découpe transversale d'un film synthétique souple cylindrique. En effet, de tels films synthétique souples cylindriques sont disponibles à moindre coût sous forme de bobines et peuvent être utilisés pour fabriquer en série des accessoires d'hygiène selon l'invention en découpant transversalement un tel film en tronçons de longueur souhaitée correspondant à celle d'un sac à déchets d'un accessoire selon l'invention. Il suffit ensuite de fixer rigidement l'une des extrémités de chaque tronçon à une collerette de suspension et l'autre extrémité à un fond rigide pour la refermer. Un tel réceptacle à déchets est particulièrement peu coûteux en fabrication et peut être fabriqué en grandes séries.

Avantageusement et selon l'invention, ce fond rigide présente un diamètre hors tout inférieur ou égal à celui de ladite ouverture de passage de déchets (et d'un orifice porte-gobelet) et porte des inscriptions visibles (par exemple des publicités et/ou un mode d'emploi de l'accessoire selon l'invention). Ainsi, ces inscriptions sont visibles lorsque l'accessoire d'hygiène selon l'invention est placé sur un anneau porte-gobelet rabattable, ce dernier étant rabattu verticalement contre le dossier d'un siège passager, le réceptacle à déchets replié en accordéon étant inséré dans l'épaisseur de l'anneau porte-gobelet. Le fond est de préférence plus rigide que le cylindre souple formant le réceptacle à déchets, et est par exemple formé d'un matériau similaire ou identique à celui constituant ladite collerette de suspension. Il peut être formé avec la collerette de suspension par découpe d'une même pièce en forme de disque.

Par ailleurs, chaque matériau constitutif du réceptacle déchets peut faire l'objet de nombreuses variantes. Dans certains modes de réalisation avantageux, le réceptacle à déchets est formé en au moins un matériau choisi dans le groupe formé des papiers, des tissus, des textiles non-tissés souples et des polymères. Le cylindre souple formant le réceptacle à déchets d'un accessoire d'hygiène selon l'invention est par exemple formé d'un polymère souple choisi dans le groupe formé des polyéthylènes, des élastomères, des polymères vinyliques, des polyacrylates (polymères acryliques), des polyamides, de leurs mélanges et de leurs copolymères.

De préférence, le réceptacle déchets est constitué en un matériau étanche aux liquides. Néanmoins, rien n'empêche de prévoir un matériau non parfaitement étanche, la plupart des déchets individuels des passagers d'un véhicule n'étant pas liquides et contenant pas de liquide susceptible de s'écouler.

L'invention s'étend également à un procédé d'entretien d'un dispositif de transport de passagers tel qu'un véhicule comprenant des sièges passagers équipés chacun d'au moins un orifice porte-gobelet, caractérisé en ce qu'on met un accessoire d'hygiène selon l'invention à disposition de chaque passager, et on récupère chaque accessoire d'hygiène après usage.

Des accessoires d'hygiène selon l'invention peuvent être ainsi placés à disposition des passagers lors de leur embarquement, par exemple dans une corbeille à l'entrée du véhicule. En variante ou en combinaison, avantageusement et selon l'invention avant embarquement des passagers, on place un accessoire d'hygiène selon l'invention dans chaque orifice porte-gobelet. Après utilisation, on peut récupérer chaque accessoire d'hygiène selon l'invention, soit simultanément à la récupération des déchets et des gobelets au cours du transport par le personnel navigant. Après débarquement des passagers, on peut récupérer également chaque accessoire d'hygiène selon l'invention usagé laissé par un passager dans un orifice porte-gobelet. Pour récupérer un tel accessoire usagé il suffit de l'extraire vers le haut de l'orifice porte-gobelet. Il est à noter à cet égard que si un gobelet a été inséré dans l'ouverture de passage de déchets d'un accessoire d'hygiène selon l'invention en position dans un orifice porte-gobelet, l'extraction du gobelet entraîne automatiquement celle de l'accessoire d'hygiène selon l'invention du fait des dents de la collerette de suspension qui la solidarisent au gobelet.

L'invention s'applique en particulier à l'entretien (en particulier au nettoyage) de véhicules de transport en commun tels que les cars, les bus, les véhicules sur rails (trains, tramways...), les avions de ligne, les bateaux de ligne, les bateaux de croisière, etc.

L'invention concerne également un accessoire et un procédé caractérisés en combinaison par tout ou partie des caractéristiques mentionnées ci-dessus ou ci-après.

D'autres buts, caractéristiques et avantages de l'invention apparaîtront à la lecture de la description suivante donnée à titre non limitatif et qui se réfère aux figures annexées dans lesquelles :
- la figure 1 est une vue schématique en perspective de dessous d'un accessoire d'hygiène selon un mode de réalisation de l'invention représenté à l'état replié avant utilisation,
- la figure 2 est une vue schématique en coupe axiale de l'accessoire d'hygiène de la figure 1 en place sur un anneau porte-gobelet,
- la figure 3 est une vue schématique en élévation d'un anneau porte-gobelet à l'état rabattu vers le haut dans son logement à l'arrière du dossier d'un siège passager, et équipé d'un accessoire d'hygiène selon l'invention,
- la figure 4 est une vue schématique en perspective illustrant un accessoire d'hygiène selon un mode de réalisation de l'invention en cours d'utilisation, le réceptacle à déchets étant déplié,
- la figure 5 est une vue schématique de dessus d'une pièce découpée permettant de former le fond et la collerette de suspension d'un accessoire d'hygiène selon un mode de réalisation de l'invention.

L'accessoire d'hygiène selon l'invention pour siège passager représenté sur les figures comprend une collerette 12 de suspension en forme générale de rondelle plate délimitant une ouverture 13 de passage globalement circulaire, un sac 14 à déchets souple fixé sous la collerette 12 de suspension de façon inamovible, par exemple par couture et/ou collage et/ou soudure et/ou autre moyen de fixation, et un opercule 15 supérieur frangible recouvrant l'ouverture 13 de passage et fixé au-dessus de la collerette 12 de suspension.

Le sac 14 à déchets est formé d'un cylindre 16 de matériau souple, de préférence étanche, par exemple en polyéthylène ou en autre matière synthétique polymérique de faible coût. L'une des extrémités axiales du cylindre 16 est fixée sous la collerette 12 de suspension autour de l'ouverture 13 de passage. La liaison entre la collerette 12 de suspension et le cylindre 16 souple est de préférence étanche, mais rien n'empêche de prévoir qu'elle ne le soit pas dans certains modes de réalisation. Il suffit en effet qu'elle soit suffisamment solide pour résister au poids des déchets et qu'elle ne permette pas le passage de ces derniers hors du sac 14 à déchets.

L'autre extrémité inférieure du cylindre 16 souple est refermée par un disque formant le fond 17 du sac 14 à déchets. Ce fond 17 est de préférence en un matériau rigide qui peut être similaire ou identique au matériau constitutif de la collerette 12 de suspension. Le fond 17 est fixé à l'extrémité inférieure du cylindre 16 souple de façon inamovible, de préférence de façon similaire à la fixation du cylindre 16 la collerette de suspension, c'est-à-dire par exemple par couture et/ou collage et/ou soudure et/ou autre moyen de fixation. La liaison entre le fond 17 et le cylindre 16 souple est de préférence étanche, mais rien n'empêche de prévoir qu'elle ne le soit pas dans certains modes de réalisation. Il suffit en effet qu'elle soit suffisamment solide pour résister au poids des déchets et qu'elle ne permette pas le passage de ces derniers hors du sac 14 à déchets.

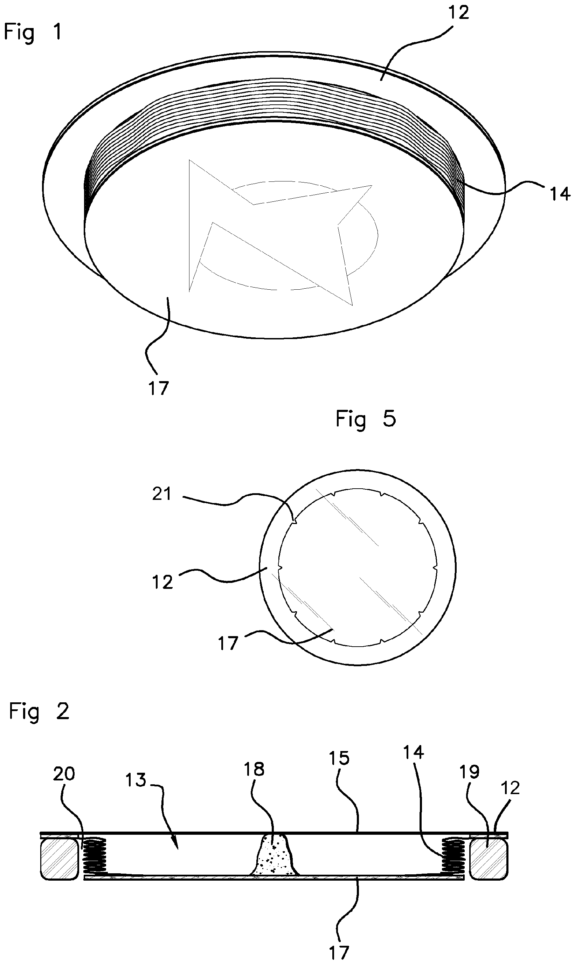

Initialement, l'accessoire d'hygiène selon l'invention est fabriqué avec le sac 14 à déchets souple replié sous la collerette 12 de suspension, le fond 17 étant fixé temporairement à l'opercule 15 frangible, par exemple par un point 18 de colle comme représenté figure 2, ou par toute autre fixation temporaire (couture et/ou soudure...). Le cylindre 16 souple constituant le sac 14 à déchets est replié en accordéon.

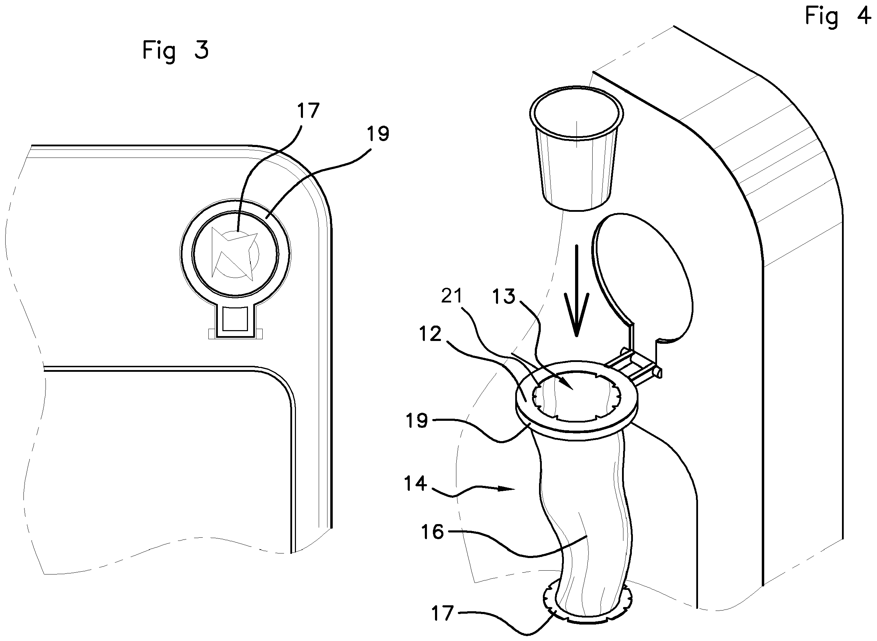

Dans cet état, l'épaisseur du sac 14 à déchets est de préférence adaptée pour correspondre au moins sensiblement à l'épaisseur d'un anneau 19 porte-gobelet. Le fond 17 et le cylindre 16 formant le sac 14 à déchets présentent un diamètre extérieur légèrement inférieur au diamètre interne d'un orifice 20 porte-gobelet. Ainsi, lorsqu'on met en place l'accessoire d'hygiène dans un orifice 20 porte-gobelet délimité par un tel anneau 19 porte-gobelet, le sac 14 à déchets est inséré et logé dans l'orifice 20 porte-gobelet, et le fond 17 est visible de l'extérieur, notamment lorsque le l'anneau 19 porte-gobelet est rabattu vers le haut dans son logement comme représenté figure 3 (le fond 17 étant alors dans le plan de l'arrière du dossier du siège passager portant l'anneau 19 porte-gobelet).

La collerette 12 de suspension s'étend radialement au-dessus de l'anneau 19 porte-gobelet, qui supporte ainsi l'accessoire d'hygiène selon l'invention.

Les différents sièges passagers d'un véhicule de transport en commun peuvent être équipés d'accessoire d'hygiène selon l'invention avant l'embarquement des passagers, chaque anneau 19 porte-gobelet recevant un accessoire d'hygiène selon l'invention. En variante ou en combinaison un accessoire d'hygiène selon l'invention peut être distribué aux passagers lors de leur embarquement à bord d'un tel véhicule de transport en commun.

Pour l'utilisation de l'accessoire d'hygiène selon l'invention, le passager auquel l'anneau 19 porte-gobelet est destiné peut déplier cet anneau 19 pour le placer en position horizontale. La collerette 12 de suspension s'étend radialement au-dessus de l'anneau 19 porte-gobelet, qui supporte ainsi l'accessoire d'hygiène selon l'invention. Il suffit au passager de percer avec le doigt l'opercule 15 frangible pour désolidariser le fond 17 de cet opercule 15, et entraîner le déploiement vers le bas du sac 14 à déchets dans l'état représenté figure 4. L'opercule 15 frangible étant ôté, l'ouverture 13 de passage est libérée et permet l'insertion de déchets dans le sac 14 à déchets ainsi déplié. L'opercule 15 frangible peut être un simple film de polyéthylène doté de fentes radiales ou de perforations facilitant son déchirement, par exemple fixé par soudure haute fréquence sur la collerette 12 de suspension.

Il est à noter que si l'ouverture 13 de passage présente un diamètre supérieur ou égal au diamètre de l'orifice 20 porte-gobelet et si le sac 14 à déchets est suffisamment mince, un gobelet peut être placé dans l'ouverture 13 de passage (cf. figure 4) et maintenu en place et porté par l'anneau 19 porte-gobelet de façon traditionnelle. Le gobelet referme alors l'ouverture 13 de passage.

Avantageusement, dans le mode de réalisation représenté sur les figures 4 et 5, la collerette 12 de suspension présente des dents 21 s'étendant radialement en saillie vers l'intérieur de ladite ouverture 13 de passage de déchets. Ces dents 21 peuvent être triangulaires, ou arrondies (par exemple en forme de demi disque) ou autres. Elles permettent de coincer en place un gobelet inséré dans l'ouverture 13 de passage. Elles facilitent l'extraction de l'ensemble formé par le gobelet et l'accessoire selon l'invention hors de l'orifice 20 porte-gobelet. Il suffit en effet de saisir le gobelet et de le tirer vers le haut pour extraire l'ensemble, le gobelet entraînant la collerette 12 de suspension par l'intermédiaire des dents. Il est à noter à ce titre que les gobelets jetables sont en général dotés de rainures périphériques horizontales avec lesquelles les dents 21 peuvent coopérer en procurant un assemblage et un maintien du gobelet d'autant plus efficace.

La collerette 12 de suspension et le fond 17 peuvent être formés par découpe d'une même pièce en forme de disque, cette découpe permettant, le cas échéant, de former les dites dents 21 et permettant que le fond 17 s'imbrique dans la collerette 12 de suspension à l'état plié (avant déploiement du sac14).

Après utilisation, il est facile et rapide de sortir vers le haut l'accessoire d'hygiène selon l'invention en dehors de l'orifice 20 porte-gobelet pour le placer au rebut. Un accessoire d'hygiène selon l'invention constitue ainsi une garniture jetable améliorant l'hygiène dans les véhicules de transport de passagers.

Les dimensions d'un accessoire d'hygiène selon l'invention peuvent être par exemple les suivantes : diamètre de l'ouverture 13 de passage (à la base des dents 21) et diamètre hors tout du fond 17 : 50mm à 60mm ; diamètre extérieur de la collerette 12 de suspension : 70mm à 90 mm ; hauteur du sac 14 à déchets replié en accordéon sous la collerette de suspension : 0,5cm à 2cm ; hauteur du sac 14 à déchets déplié : 8cm à 15cm. D'autres dimensions sont possibles.

Il est à noter qu'un accessoire d'hygiène selon l'invention peut également être placé dans tout autre orifice porte-gobelet que celui d'un anneau porte-gobelet rabattable, par exemple dans un orifice porte-gobelet ménagé dans une tablette rabattable ou escamotable ou dans un accoudoir ou autre.

## Revendications

1. Accessoire d'hygiène de siège passager de dispositif de transport de passagers comprenant :
- un réceptacle (14) à déchets,
- des moyens (12) de suspension à un siège passager, comprenant une collerette (12) de suspension délimitant une ouverture (13) de passage de déchets, le réceptacle (14) à déchets étant relié à la collerette (12) de suspension de façon à pouvoir être suspendu sous cette dernière et à recevoir des déchets introduits dans ladite ouverture (13) de passage de déchets,
- la collerette (12) de suspension étant adaptée pour pouvoir :
∘ être supportée autour d'un orifice,
∘ porter le réceptacle (14) à déchets s'étendant dans ledit orifice sous ladite ouverture de passage de déchets,
**caractérisé en ce que** :
- lesdits moyens de suspension à un siège passager sont formés de ladite collerette (12) de suspension
- la collerette (12) de suspension est adaptée pour pouvoir :
∘ être supportée autour d'un orifice de siège passager,
∘ porter le réceptacle(14) à déchets s'étendant dans ledit orifice de siège passager sous ladite ouverture de passage de déchets
- le réceptacle (14) à déchets est maintenu replié en accordéon sous ladite collerette (12) de suspension avant usage par une fixation temporaire adaptée pour permettre son déploiement vers le bas.

2. Accessoire d'hygiène selon la revendication 1, **caractérisé en ce que** ladite collerette (12) de suspension est formée en au moins un matériau choisi dans le groupe formé des papiers, des cartons, des textiles non-tissés et des polymères.

3. Accessoire d'hygiène selon l'une des revendications 1 ou 2, **caractérisé en ce que** ladite collerette (12) de suspension est formée d'une rondelle plane circulaire rigide.

4. Accessoire d'hygiène selon l'une des revendications 1 à 3, **caractérisé en ce que** ladite collerette (12) de suspension présente une épaisseur inférieure à 3mm.

5. Accessoire d'hygiène selon l'une des revendications 1 à 4, **caractérisé en ce que** ladite ouverture (13) de passage de déchets est globalement circulaire de diamètre supérieur ou égal à 70 mm.

6. Accessoire d'hygiène selon l'une des revendications 1 à 5, **caractérisé en ce que** ladite collerette (12) de suspension présente des dents (21) s'étendant radialement en saillie vers l'intérieur de ladite ouverture (13) de passage de déchets.

7. Accessoire d'hygiène selon l'une des revendications 1 à 6, **caractérisé en ce que** ladite collerette (12) de suspension s'étend radialement vers l'extérieur à partir de ladite ouverture (13) de passage de déchets selon un encombrement radial inférieur à 90 mm.

8. Accessoire d'hygiène selon l'une des revendications 1 à 7, **caractérisé en ce que** le réceptacle (14) à déchets présente une épaisseur suffisamment fine pour ne pas empêcher l'insertion d'un gobelet dans ladite ouverture (13) de passage de déchets et dans ledit orifice.

9. Accessoire d'hygiène selon l'une des revendications 1 à 8, **caractérisé en ce que** le sac (14) à déchets est maintenu replié en accordéon avant usage par une fixation temporaire d'une extrémité du sac (14) à déchets sous un opercule (15) frangible fixé sur ladite collerette (12) de suspension et couvrant au moins partiellement ladite ouverture (13) de passage de déchets.

10. Accessoire d'hygiène selon l'une des revendications 1 à 9, **caractérisé en ce que** le sac (14) à déchets maintenu replié en accordéon présente une épaisseur inférieure à 2cm.

11. Accessoire d'hygiène selon l'une des revendications 1 à 10, **caractérisé en ce que** le réceptacle (14) à déchets est un sac souple.

12. Accessoire d'hygiène selon l'une des revendications 1 à 11 **caractérisé en ce que** le réceptacle (14) à déchets est formé d'un cylindre (16) souple refermé par un fond (17).

13. Accessoire d'hygiène selon la revendication 12, **caractérisé en ce que** le fond (17) présente un diamètre hors tout inférieur ou égal à celui de l'ouverture (13) de passage de déchets et porte des inscriptions visibles.

14. Procédé d'entretien d'un dispositif de transport de passagers comprenant des sièges passagers équipés chacun d'au moins un orifice porte-gobelet, **caractérisé en ce qu'**on met un accessoire d'hygiène selon l'une des revendications 1 à 13 à disposition de chaque passager, et on récupère chaque accessoire d'hygiène après usage.

15. Procédé selon la revendication 14, **caractérisé en ce qu'**avant embarquement des passagers, on place un accessoire d'hygiène dans chaque orifice (20) porte-gobelet.

## Patentansprüche

1. Hygienezubehör für einen Passagiersitz einer Passagiertransportvorrichtung, Folgendes umfassend:
- einen Abfallbehälter (14),
- Aufhängemittel (12) an einem Passagiersitz, umfassend einen Aufhängekragen (12), der eine Durchlassöffnung (13) für Abfälle eingrenzt, wobei der Abfallbehälter (14) derart mit dem Aufhängekragen (12) verbunden ist, um unter diesem Letzteren aufgehängt werden zu können, und Abfälle aufzunehmen, die in die Durchlassöffnung (13) für Abfälle eingeführt werden,
- wobei der Aufhängekragen (12) ausgeführt ist, um:
° um ein Loch getragen werden zu können,
∘ den Abfallbehälter (14) tragen zu können, der sich in dem Loch unter der Durchlassöffnung für Abfälle erstreckt,
**dadurch gekennzeichnet, dass**:
- die Aufhängemittel an einem Passagiersitz aus dem Aufhängekragen (12) gebildet sind
- wobei der Aufhängekragen (12) ausgeführt ist, um:
° um ein Loch eines Passagiersitzes herum getragen werden zu können,
° den Abfallbehälter (14) tragen zu können, der sich in dem Loch eines Passagiersitzes unter der Durchlassöffnung für Abfälle erstreckt
- der Abfallbehälter (14) vor Verwendung unter dem Aufhängekragen (12) durch eine vorübergehende Befestigung ziehharmonikaartig zusammengefaltet gehalten wird, die ausgeführt ist, um dessen Entfaltung nach unten zu erlauben.

2. Hygienezubehör nach Anspruch 1, **dadurch gekennzeichnet, dass** der Aufhängekragen (12) aus mindestens einem Material gebildet ist, ausgewählt aus der Gruppe, die aus Papieren, Kartons, Vliesen und Polymeren gebildet wird.

3. Hygienezubehör nach einem der Ansprüche 1 oder 2, **dadurch gekennzeichnet, dass** der Aufhängekragen (12) aus einer starren, kreisförmigen ebenen Scheibe gebildet wird.

4. Hygienezubehör nach einem der Ansprüche 1 bis 3, **dadurch gekennzeichnet, dass** der Aufhängekragen (12) eine Dicke von weniger als 3mm aufweist.

5. Hygienezubehör nach einem der Ansprüche 1 bis 4, **dadurch gekennzeichnet, dass** die Durchlassöffnung (13) für Abfälle im Allgemeinen kreisförmig mit einem Durchmesser von größer oder gleich 70mm ist.

6. Hygienezubehör nach einem der Ansprüche 1 bis 5, **dadurch gekennzeichnet, dass** der Aufhängekragen (12) Zähne (21) aufweist, die sich radial ins Innere der Durchlassöffnung (13) für Abfälle überstehend erstrecken.

7. Hygienezubehör nach einem der Ansprüche 1 bis 6, **dadurch gekennzeichnet, dass** sich der Aufhängekragen (12) radial aus der Durchlassöffnung (13) für Abfälle heraus mit einem radialen Platzbedarf von weniger als 90mm nach außen erstreckt.

8. Hygienezubehör nach einem der Ansprüche 1 bis 7, **dadurch gekennzeichnet, dass** der Abfallbehälter (14) eine Dicke aufweist, die fein genug ist, um das Einführen eines Bechers in die Durchlassöffnung (13) für Abfälle und in das Loch nicht zu verhindern.

9. Hygienezubehör nach einem der Ansprüche 1 bis 8, **dadurch gekennzeichnet, dass** der Abfallbeutel (14) vor Verwendung durch eine vorübergehende Befestigung eines Endes des Abfallbeutels (14) unter einem brechbaren Deckel (15) ziehharmonikaartig zusammengefaltet gehalten wird, der auf dem Aufhängekragen (12) befestigt ist, und die Durchlassöffnung (13) für Abfälle mindestens teilweise abdeckt.

10. Hygienezubehör nach einem der Ansprüche 1 bis 9, **dadurch gekennzeichnet, dass** der Abfallbeutel (14), der ziehharmonikaartig zusammengefaltet gehalten wird, eine Dicke von weniger als 2cm aufweist.

11. Hygienezubehör nach einem der Ansprüche 1 bis 10, **dadurch gekennzeichnet, dass** der Abfallbehälter (14) ein flexibler Beutel ist.

12. Hygienezubehör nach einem der Ansprüche 1 bis 11, **dadurch gekennzeichnet, dass** der Abfallbehälter (14) aus einem flexiblen Zylinder (16) gebildet wird, der durch einen Boden (17) verschlossen ist.

13. Hygienezubehör nach Anspruch 12, **dadurch gekennzeichnet, dass** der Boden (17) einen Gesamtdurchmesser kleiner oder gleich jenem der Durchlassöffnung (13) für Abfälle aufweist, und sichtbare Aufschriften trägt.

14. Verfahren zur Wartung einer Passagiertransportvorrichtung, Passagiersitze umfassend, die jeweils mit mindestens einem Becherhalterloch ausgestattet sind, **dadurch gekennzeichnet, dass** man jedem Passagier ein Hygienezubehör nach einem der Ansprüche 1 bis 13 zur Verfügung stellt, und man jedes Hygienezubehör nach Verwendung zurückerhält.

15. Verfahren nach Anspruch 14, **dadurch gekennzeichnet, dass** vor dem Einsteigen der Passagiere ein Hygienezubehör in jedem Becherhalterloch (20) platziert wird.

## Claims

1. Hygiene accessory for a passenger seat of a passenger-transport device comprising:
- a waste container (14),
- means (12) for hanging from a passenger seat, comprising a hanging collar (12) defining an aperture (13) for inserting waste, the waste container (14) being connected to the hanging collar (12) in such a way that it can be hung below the latter and receive waste introduced into said waste-insertion aperture (13),
- the hanging collar (12) being adapted to be able to:
∘ be held around an opening,
∘ support the waste container (14) extending into said opening below said waste-insertion aperture,
**characterised in that**:
- said means for hanging on a passenger seat are formed by said hanging collar (12)
- the hanging collar (12) is adapted to be able to:
∘ be held around an opening of a passenger seat,
∘ support the waste container (14) extending into said opening of a passenger seat below said waste-insertion aperture,
- the waste container (14) is kept folded up in an accordion-like fashion below the hanging collar (12) prior to use by a temporary attachment suitable for allowing it to unfold downwardly.

2. Hygiene accessory according to claim 1, **characterised in that** said hanging collar (12) is formed of at least one material selected from the group consisting of papers, card, non-woven textiles and polymers.

3. Hygiene accessory according to any one of claims 1 or 2, **characterised in that** said hanging collar (12) is formed by a rigid circular planar washer.

4. Hygiene accessory according to any one of claims 1 to 3, **characterised in that** said hanging collar (12) has a thickness of less than 3 mm.

5. Hygiene accessory according to any one of claims 1 to 4, **characterised in that** said waste insertion aperture (13) is generally circular with a diameter greater than or equal to 70 mm.

6. Hygiene accessory according to any one of claims 1 to 5, **characterised in that** said hanging collar (12) has teeth (21) extending radially, protruding towards the inside of said waste-insertion aperture (13).

7. Hygiene accessory according to any one of claims 1 to 6, **characterised in that** said hanging collar (12) extends radially outwards from said waste-insertion aperture (13) by a radial extent of less than 90 mm.

8. Hygiene accessory according to any one of claims 1 to 7, **characterised in that** the waste container (14) is sufficiently thin not to prevent insertion of a cup into said waste-insertion aperture (13) and into said opening.

9. Hygiene accessory according to any one of claims 1 to 8, **characterised in that** the waste bag (14) is kept folded up in an accordion-like fashion prior to use by a temporary attachment of one end of the waste bag (14) below a frangible cover (15) fixed to said hanging collar (12) and covering said waste-insertion aperture (13) at least partially.

10. Hygiene accessory according to any one of claims 1 to 9, **characterised in that** said waste bag (14) being kept folded up in an accordion-like fashion has a thickness of less than 2 cm.

11. Hygiene accessory according to any one of claims 1 to 10, **characterised in that** the waste container collar (14) is a flexible bag.

12. Hygiene accessory according to any one of claims 1 to 11, **characterised in that** the waste container (14) is formed of a flexible cylinder (16) closed by a base (17).

13. Hygiene accessory according to claim 12, **characterised in that** the base (17) has an overall diameter less than or equal to that of the waste-insertion aperture (13) and has visible printing.

14. Method for maintaining a passenger-transport device comprising passenger seats each fitted with at least one cup-holder opening, **characterised in that** a hygiene accessory according to any one of claims 1 to 13 is made available to each passenger, and each hygiene accessory is collected after use.

15. Method according to claim 14, **characterised in that** before embarkation of the passengers a hygiene accessory is placed in each cup-holder opening (20).
